# FASCICULE DE BREVET EUROPEEN

(11) **EP 1 661 642 B1**
(45) Date de publication et mention de la délivrance du brevet: **10.03.2010**
(21) Numéro de dépôt: 05111131.8
(22) Date de dépôt: 23.11.2005
(51) Int. Cl.: B22C 9/10, B23C 5/10

(54) **Procédé de fabrication de noyaux céramiques de fonderie pour aubes de turbines**
Verfahren zur Herstellung von keramischen Giessereikernen für Turbinenschaufeln
Process for manufacturing ceramic foundry cores for turbine blades

(30) Priorité: 26.11.2004 FR 0452789
(43) Date de publication de la demande: 31.05.2006
(73) Titulaire: SNECMA, 75015 Paris (FR)
(72) Inventeur: Prigent, Serge, 92600, Asnières sur Seine (FR); Defrocourt, Christian, 95130, Franconville (FR)
(74) Mandataire: David, Daniel

(56) Documents cités:
- EP-A- 0 371 895
- EP-A- 1 075 885
- WO-A-97/02914
- US-A- 6 164 846
- US-A1- 2003 075 301
- US-B1- 6 235 233
- US-B1- 6 254 819

## Description

La présente invention porte sur la fabrication de pièces telles que des aubages métalliques de turbomachines, présentant des cavités internes à géométrie complexe formant notamment des circuits de refroidissement, selon la technique de fonderie à cire perdue.

La fabrication de tels aubages passe par la réalisation d'un modèle en cire ou autre matériau équivalent qui comprend une pièce interne formant un noyau de fonderie et figurant les cavités de l'aubage. On utilise pour former le modèle un moule d'injection pour cire dans lequel on place le noyau et on y injecte la cire. Le modèle en cire est ensuite trempé plusieurs fois dans des barbotines constituées d'une suspension de particules céramiques pour confectionner un moule carapace. On élimine la cire et on cuit le moule carapace. On obtient l'aubage en coulant un métal en fusion qui vient occuper les vides entre la paroi intérieure du moule carapace et le noyau. Grâce à un germe ou un sélecteur approprié et un refroidissement contrôlé, le métal se solidifie selon une structure voulue. Selon la nature de l'alliage et les propriétés attendues de la pièce résultant de la coulée. Il peut s'agir de solidification dirigée à structure colonnaire (DS), de solidification dirigée à structure monocristalline (SX) ou de solidification équiaxe (EX) respectivement. Les deux premières familles de pièces concernent des superalliages pour pièces soumises à de fortes contraintes tant thermiques que mécaniques dans le turboréacteur, comme les aubes de turbines HP.

Après solidification de l'alliage, la carapace et le noyau sont décochés. Il en ressort l' aubage désiré.

Des techniques de fabrication des noyaux sont décrites dans les documents EP 371895 ou WO 97/02914. D'autres pièces différentes des noyaux céramiques de fonderie pour aubes de turbomachines sont décrites dans les documents EP 1075885, US 6235233, US 2003/0075301, US 6164846 ou US 6254819.

Les noyaux de fonderie utilisés sont composés d'une matière céramique à structure généralement poreuse. Ils sont réalisés à partir d'un mélange constitué d'une charge réfractaire sous forme de particules et d'une fraction organique plus ou moins complexe formant un liant. Des exemples de compositions sont donnés dans les brevets EP 328452, FR 2371257 ou FR 2785836. Comme cela est connu, on met en forme les noyaux de fonderie par moulage en utilisant par exemple une injection à la presse. Cette mise en forme est suivie d'une opération de déliantage au cours de laquelle la fraction organique du noyau est éliminée par un moyen tel que la sublimation ou la dégradation thermique, suivant les matériaux utilisés. Une structure poreuse en résulte. Le noyau est ensuite consolidé par un traitement thermique dans un four. Une étape de finition est éventuellement nécessaire pour éliminer et ébavurer les traces de plans de joint et obtenir la géométrie du noyau. On utilise dans ce but des outils abrasifs. Il peut être encore nécessaire de renforcer le noyau afin qu'il ne soit pas endommagé dans les cycles ultérieurs d'utilisation. On imprègne dans ce cas le noyau avec une résine organique.

En raison de la géométrie complexe des noyaux et en particulier de la présence d'évidements formant les cloisons après coulée de l'alliage métallique, le moule utilisé pour la mise en forme des noyaux comprend un nombre parfois important de sous-pièces mobiles. Les cloisons de ces sous-pièces présentent des contre-dépouilles par rapport à la direction principale d'ouverture de l'outillage. Il s'agit de légères obliquités sur la paroi du moule tendant à empêcher l'extraction de l'objet moulé. Ces sous pièces correspondant aux cloisons permettent néanmoins de réaliser directement le noyau complet par injection.

Cette technique est couramment pratiquée lorsqu'il s'agit de fabriquer un nombre important de noyaux. C'est le cas pour la fabrication des pièces d'un moteur en phase de production en série. Cependant, elle présente des inconvénients lorsqu'un nombre limité de noyaux doit être préparé, dans le cadre d'un programme de développement de moteur par exemple. Un outillage d'injection présentant un nombre de sous pièces important est obtenu après un délai jugé trop long pour un simple de développement. Son coût est aussi très élevé. En outre les opérations de finition manuelle sont longues et nécessitent beaucoup de main d'oeuvre.

Dans le cadre de moteurs en développement, le procédé d'injection dans une boîte à multiples sous pièces ne permet donc pas de répondre rapidement et de manière économique à des changements de conception du noyau. Par ailleurs, les épaisseurs requises au bord de fuite des noyaux sont de plus en plus fines. Il devient difficile de les obtenir par le procédé connu.

Pour résoudre ces problèmes, une technique connue consiste à fabriquer des noyaux céramiques dans un moule simplifié ne présentant pas de cloisons en contre dépouille. Les noyaux sont ensuite usinés après cuisson pour façonner les évidements formant les cloisons ainsi que les perturbateurs et les perçages de bord de fuite. Cependant cette technique présente certaines limites. Le matériau céramique n'ayant pas de domaine plastique, l'usinage se fait par abrasion. On utilise dans ce but des outils spéciaux diamantés qui sont très onéreux. Malgré cela les outils s'usent rapidement et ne permettent pas de respecter les exigences dimensionnelles du noyau. Par ailleurs les noyaux ont aussi, de l'un à l'autre, un retrait inégal au cours de l'étape de cuisson qui oblige à mettre en oeuvre un usinage adaptatif si on veut respecter les tolérances dimensionnelles citées ci-dessus. L'usinage adaptatif consiste à mesurer les dimensions de chaque noyau avec un moyen de mesure approprié puis à comparer ces données mesurées avec les valeurs enregistrées dans un fichier numérique et relatives au noyau voulu. En fonction de l'écart entre les valeurs mesurées sur le noyau réel et celles du fichier numérique, un logiciel calcule la trajectoire de l'outil. Ces opérations doivent être effectuées pour chaque noyau.

On connaît également un procédé tel qu'illustré par EP-A-1614488, adapté pour les programmes de développement de moteurs, consistant à former le noyau couche par couche par ajout de strates successives de céramique au moyen d'une machine utilisant un laser pour fritter des particules céramiques ou d'une machine comprenant une buse déposant un colloïde qui lie entre elles les particules de matière céramique ou bien encore d'une machine qui solidifie par le moyen d'un laser une résine chargée de particules céramique que l'on déliante ensuite avant de fritter la matière céramique. Bien que ces techniques ne mettent pas en oeuvre un outillage d'injection, les temps de fabrication des noyaux sont trop longs. En outre les dimensions sont très difficiles à maîtriser, notamment pour les noyaux d'aubes mobiles dont le bord de fuite est très fin.

On remédie à ces problèmes conformément à l'invention avec un procédé de fabrication d'un noyau de fonderie, comportant au moins un évidement, évidement de cloison, pour aube de turbomachine , comprenant la mise en forme dans un moule d'un mélange comprenant une charge de particules céramiques et un liant organique, l'extraction hors du moule, le déliantage et un traitement thermique de consolidation du noyau. Ce procédé est caractérisé par le fait que l'on forme dans ledit moule une ébauche de noyau sans ledit évidement et que l'on usine, mécaniquement par fraisage avec enlèvement de copeaux, ledit évidement après avoir extrait l'ébauche du moule et avant l'opération de traitement thermique.

Grâce à l'invention, on réduit les coûts et les délais d'obtention des noyaux de fonderie. Alors que le délai d'obtention d'un noyau par injection dans un moule avec cloison présentant des contre dépouilles est de trois à quatre mois, le délai avec la technique de l'invention est ramené à trois ou quatre semaines. La solution permet aussi un gain important en souplesse et réactivité vis-à-vis des changements de conception ainsi que de l'obtention de noyaux présentant des bords de fuite plus fins, jusqu'à 0,1-0,3 mm qu'avec le procédé de l'art antérieur. On constate aussi que grâce à ce procédé, la manipulation des noyaux se trouve réduite ce qui diminue le taux de rebut.

On a constaté en effet avec surprise que l'on pouvait travailler le noyau après son moulage alors qu'il n'avait pas encore subi de traitement thermique de consolidation. Le noyau dans cet état a une consistance plastique et peut être manipulé et travaillé tout en conservant sa forme. De plus, les noyaux ont aussi de l'un à l'autre un retrait égal après l'opération de moulage (ils sont géométriquement identiques). Contrairement aux solutions antérieures, Il n'est donc pas nécessaire de venir mesurer les noyaux et de comparer leurs dimensions par rapport à celles enregistrées dans un fichier numérique relatif au noyau. On n'a pas besoin dans le cadre de la présente invention d'usinage adaptatif.

Plus particulièrement, le noyau comprend de 80 à 85 % de charge minérale et de 15 à 20 % de liant organique. La composition correspond avantageusement à l'une de celles décrites dans le brevet EP 328452 de la demanderesse.

Conformément à une autre caractéristique, l'usinage est effectué par des passages successifs de l'outil enlevant à chaque passage une épaisseur de matière déterminée, comprise entre 0,1 et 2 mm. En particulier, l'usinage est réalisé au moyen d'une fraise par enlèvement de matière sur une machine de fraisage à au moins trois axes et de préférence à quatre ou cinq axes. Par ce moyen on parvient à réaliser automatiquement l'usinage.

Cette technique permet d'usiner un noyau non cuit à partir d'un fichier CFAO (conception et fabrication assistée par ordinateur) existant sans être pénalisé par les retraits du noyau au cours de l'étape de cuisson qui ne sont pas toujours identiques. Le noyau non cuit a les dimensions du moule dans lequel il est fabriqué. Avantageusement, les noyaux avant cuisson sont géométriquement identiques.

Conformément à une autre caractéristique, l'usinage comprend une étape de rayonnage de la portion entre la surface de l'ébauche et l'évidement.

On réalise de cette façon des évidements de formes variées correspondant aux différents éléments structurels du noyau. Notamment il est possible de réaliser un évidement traversant formant après coulée de l'alliage métallique, une cloison de séparation dans un circuit de refroidissement d'une aube de turbomachine. Il est également possible de réaliser un évidement traversant, formant après coulée, une cloison de séparation entre deux perçages d'évacuation de fluide de refroidissement dans un bord de fuite d'aube de turbomachine. Il est encore possible de réaliser un évidement non traversant et formant après coulée un perturbateur. D'autres formes sont possibles.

Pour la mise en oeuvre du procédé on utilise un outil de fraisage comprenant une tête de diamètre compris entre 0,3 et 0,8 mm et un filet de découpe en forme d'hélice dont l'angle de l'hélice est compris entre 40 et 60 degrés.

D'autres caractéristiques et avantages ressortiront à la lecture de la description qui suit d'un mode de réalisation du procédé de l'invention en référence aux dessins en annexe sur lesquels
La figure 1 est une vue en coupe d'une aube de turbine refroidie
La figure 2 représente en perspective une ébauche de noyau après extraction d'un moule simplifié
La figure 3 représente le noyau de la figure 2 après usinage des évidements conformément à l'invention
La figure 4 est une coupe selon IV-IV de la figure 3
La figure 5 montre le mode d'usinage au moyen d'une fraise.

La description qui suit correspond à l'application de l'invention à la formation d'un noyau de fonderie pour une aube de turbine haute pression dans un moteur à turbine à gaz pour une utilisation aéronautique ou terrestre. Cette présentation n'est pas limitative.

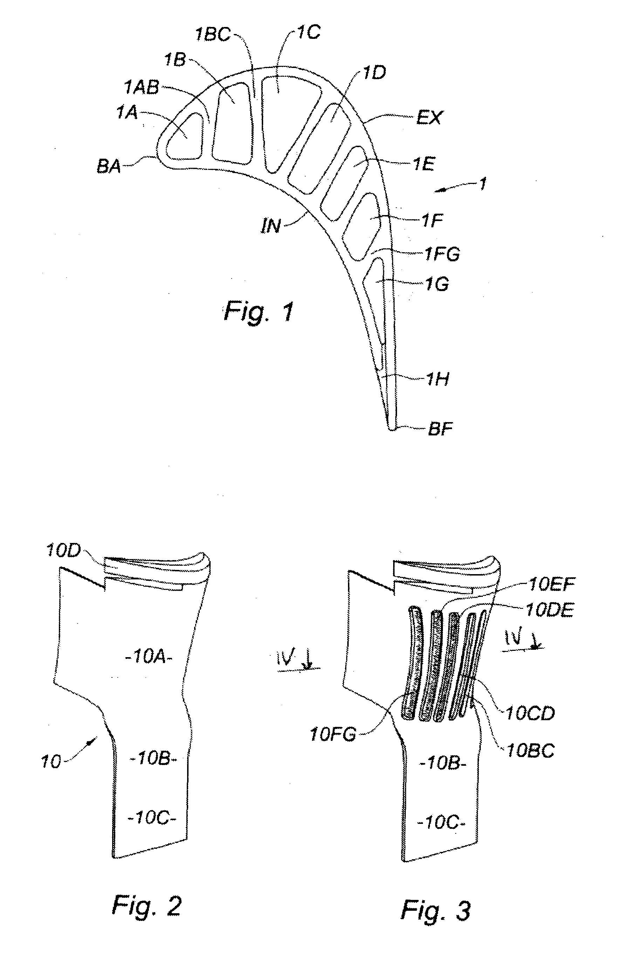

Comme on le voit sur la figure 1, une aube 1 de turbine comprend une surface intrados IN une surface extrados EX, un bord d'attaque BA et un bord de fuite BF. Lorsqu'il s'agit d'une aube de turbine haute pression d'un moteur à turbine à gaz pour une utilisation aéronautique, l'aube comprend des cavités internes, ici 7 : 1A à 1G. Le bord de fuite comprend une ouverture alimentée depuis la dernière cavité 1G pour l'échappement du fluide de refroidissement qui est de l'air prélevé au compresseur.

Les cavités sont séparées les unes des autres par des cloisons : 1AB, 1BC, etc. Lorsqu'on fabrique ces aubes par coulée d'un métal en fusion, on doit incorporer au moule carapace un noyau qui occupe les vides des cavités à former dans l'aube. Ce noyau comme on le devine à partir de la figure 1 est complexe. Il comprend notamment des évidements correspondant aux cloisons dont la réalisation n'est pas simple. En effet ce noyau est réalisé par injection dans un moule dans lequel on doit ménager des contre dépouilles figurant ces évidements. La technique habituelle consiste à concevoir le moule avec des sous pièces qui présentent une certaine mobilité pour pouvoir extraire le noyau après injection de la matière dans le moule. Comme on l'a expliqué plus haut, la fabrication de ce type de moule avec sous pièces mobiles est très longue et onéreuse. L'objet de l'invention est la réalisation d'un noyau ayant une telle structure complexe sans avoir à confectionner un moule de même complexité.

Conformément à l'invention, on confectionne un moule simplifié, c'est-à-dire un moule sans sous pièce mobile ou au moins avec un nombre réduit de sous pièces mobiles. Dans le sens de l'invention, un moule est dit simplifié s'il a au moins un évidement, tel qu'un évidement de cloison, ne comprend pas de sous pièce correspondante et que cet évidement doit être façonné par usinage. On voit sur la figure 2 le noyau 10 issu d'un tel moule simplifié. Ce noyau 10 comprend une partie correspondant aux cavités de la pale 10A, une partie 10B correspondant aux cavités du pied de l'aube et une partie 10C formant poignée de préhension pendant la fabrication. En tête de la pale on voit aussi une partie 10D correspondant à ce qui est désigné par baignoire dans le jargon du domaine. Cette partie est ici séparée de la partie 10A par un évidement transversal. Cet évidement forme la paroi de fond de baignoire après coulée.

Pour la fabrication de cette ébauche de noyau, on a réalisé un mélange approprié. Il s'agit notamment d'un liant organique associé à une charge minérale. Par exemple le mélange est fait selon l'enseignement de la demande de brevet EP 328452. Le noyau présente une bonne tenue en main et sa constitution en permet le travail au moyen d'un outil de fraisage par enlèvement de copeaux.

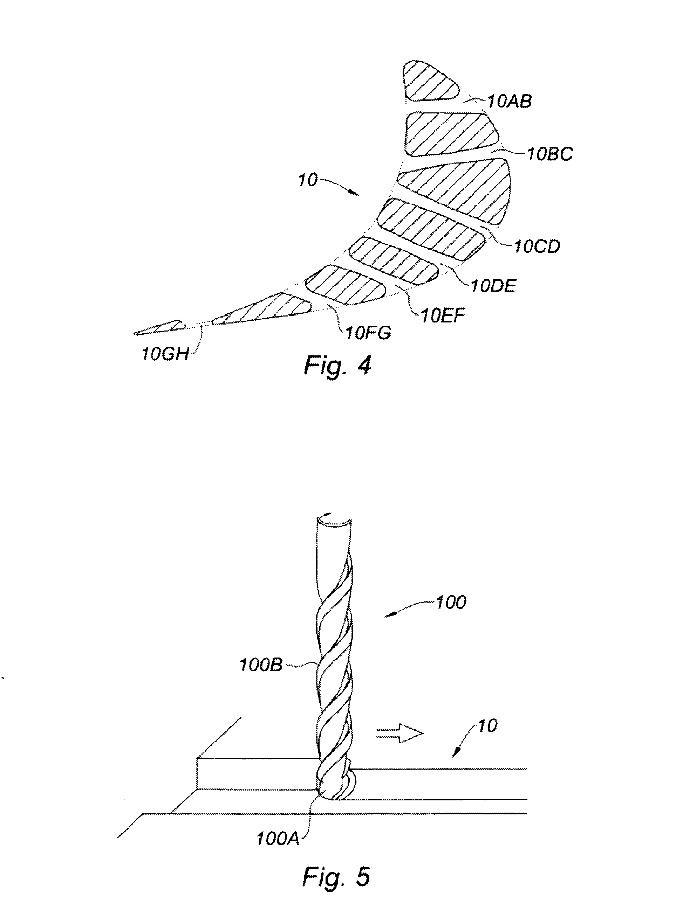

L'étape suivante consiste à usiner, dans cette ébauche 10, les évidements qui n'ont pas été prévus par le moule. L'usinage est avantageusement réalisé au moyen d'un outil tel que montré sur la figure 5. Il s'agit d'une fraise 100 comportant une extrémité 100A de coupe et d'un filet ou bord de coupe en hélice le long de sa tige 100B. L'évidement à usiner a par exemple une largeur d'un mm. On déplace la fraise perpendiculairement à la surface à usiner à une profondeur par rapport à cette surface, comprise, pour une aube de turbine, entre 0,1 et 0,5 mm. La vitesse de l'outil ainsi que celle de son déplacement sont fixées également. On limite ainsi les efforts sur la matière et on évite que l'outil fléchisse. La tête de l'outil a avantageusement un diamètre compris entre 0,3 et 0,8 mm, fonction de la largeur de l'évidement à pratiquer dans le noyau. On procède donc en creusant par paliers successifs de profondeurs déterminées jusqu'à traverser le noyau. On réserve de préférence une garde pendant cette phase et, après avoir traversé le noyau, on fraise le profil exact à obtenir en faisant travailler la fraise sur sa tige.

On utilise de préférence une machine outil à commande numérique de type à cinq axes de déplacement, par exemple, trois axes pour le positionnement de la fraise dans l'espace et deux axes pour le positionnement du noyau. On peut programmer aisément cette machine pour automatiser l'usinage des évidements.

On termine un évidement par une opération de rayonnage. On définit les paramètres tels que la vitesse de coupe, la vitesse de rotation de l'outil, sa trajectoire et son diamètre.

Les noyaux d'aubage ont maintenant des bords de fuite de plus en plus fins. Il est difficile de les obtenir avec le procédé par injection de l'art antérieur. Le procédé de l'invention permet de mouler une ébauche avec un bord de fuite relativement épais, et d'usiner cette partie pour obtenir l'épaisseur souhaitée, jusqu'à 0,15 mm.

Sur les figures 3 et 4, on voit le noyau 10 après qu'il a été usiné. Les évidements 10AB, 10BC etc. longitudinaux et sensiblement dans la direction axiale de l'aube sont traversants et de la largeur des cloisons 1AB, 1BC etc. qu'ils formeront, au retrait près, dans la pièce à la coulée du métal en fusion dans le moule carapace.

Une fois le noyau usiné, on passe aux traitements suivants, connus en soi, dans le processus de fabrication des noyaux de fonderie. Ce dernier comprend le déliantage, c'est-à-dire l'élimination du liant organique. On chauffe, dans ce but, le noyau à une température suffisante pour dégrader les composants organiques qu'il contient. Les autres étapes consistent à chauffer ensuite le noyau à la température de frittage des particules céramiques qui le composent. Si une consolidation supplémentaire est nécessaire, on procède à une imprégnation avec une résine organique

On a représenté essentiellement les évidements de cloison car la solution permet une simplification substantielle de la géométrie des moules de mise en forme des noyaux. Cependant, on peut l'étendre à l'usinage de toute partie du noyau. Par exemple cette technique permet la réalisation de parties du noyau qui sont très fines comme la partie du noyau située à proximité du bord de fuite et comportant les canaux pour le passage de l'air s'échappant de l'intérieur de l'aube en fin de circuit de refroidissement et injecté dans la veine de gaz.

## Revendications

1. Procédé de fabrication d'un noyau de fonderie, comportant au moins un évidement (10AB, 10BC,..., 10FG) de cloison, pour aube (1) de turbomachine, comprenant la mise en forme dans un moule d'un mélange comprenant une charge de particules céramiques et un liant organique, l'extraction hors du moule, le déliantage et un traitement thermique de consolidation du noyau, **caractérisé par le fait que** l'on forme dans ledit moule une ébauche (10) de noyau sans ledit évidement et que l'on usine, mécaniquement par fraisage avec enlèvement de copeaux, ledit évidement (10AB, 10BC, .., 10FG) après avoir extrait l'ébauche (10) du moule et avant l'opération de traitement thermique.

2. Procédé selon la revendication 1 dans lequel l'usinage est effectué par passages successifs sur une épaisseur déterminée comprise entre 0,1 et 2 mm.

3. Procédé selon la revendication 1 ou 2, dont l'usinage est réalisé au moyen d'une fraise (100) par enlèvement de matière sur une machine de fraisage à au moins trois axes.

4. Procédé selon la revendication 1 dont l'usinage comprend une étape de rayonnage de la portion entre la surface de l'ébauche (10) et l'évidement (10AB, 10BC,..., 10FG).

5. Procédé selon l'une des revendications 1 à 4 pour la fabrication d'un noyau comportant une pluralité d' évidements (10AB, 10BC,..., 10FG) dont le moule comporte un nombre de sous-pièces mobiles inférieur à celui des évidements du noyau.

6. Procédé selon l'une des revendications 1 à 5 dont l'évidement est traversant et forme après coulée une cloison (1AB, 1BC, ..., 1FG) de séparation dans un circuit de refroidissement d'une aube (1) de turbomachine.

7. Procédé selon l'une des revendications 1 à 5 dont l'évidement (10AB, 10BC,..., 10FG) est traversant et forme après coulée, une cloison (1AB, 1BC, ..., 1FG) de séparation entre deux perçages d'évacuation de fluide de refroidissement dans un bord de fuite d'aube (1) de turbomachine.

8. Procédé selon l'une des revendications 1 à 5, dont l'évidement n'est pas traversant et forme après coulée un perturbateur.

9. Procédé selon la revendication 1 ou 2 dont le fraisage est effectué au moyen d'un outil de fraisage comprenant une tête (100A) de diamètre compris entre 0,3 et 0,8 mm et un filet (100B) de découpe en forme d'hélice dont l'angle de l'hélice est compris entre 40 et 60 degrés.

## Claims

1. Method of manufacturing a cast core comprising at least one recess (10AB, 10BC, ..., 10FG), for a partition, for a turbomachine blade (1), comprising the shaping in a mould of a mixture containing a ceramic particles filler and an organic binder, extraction from the mould, removal of the binder and a heat treatment to consolidate the core, **characterized in that** a core rough casting (10) without the said recess is formed in the said mould and **in that** the said recess (10AB, 10BC, ..., 10FG) is machined once the rough casting (10) has been extracted from the mould and before the heat treatment operation.

2. Method according to claim 1 in which the machining is performed by successive passes with a determined thickness ranging between 0.1 and 2 mm.

3. Method according to claim 1 or 2, the machining operation of which is performed using a milling cutter (100) by removing material on an at least three-axis milling machine.

4. Method according to claim 1, the machining operation of which involves a step of radiusing the portion between the surface of the rough casting (10) and the recess (10AB, 10BC, ..., 10FG).

5. Method according to anyone of the claims 1 to 4 for the manufacture of a core comprising a plurality of recesses (10AB, 10BC, ..., 10FG), the mould of which comprises a number of moving subcomponents lower in number than the number of recesses in the core.

6. Method according to anyone of the claims 1 to 5, the recess of which is a through-opening and after casting forms a dividing partition (1AB, 1BC, ..., 1FG) in a turbomachine blade (1) cooling circuit.

7. Method according to anyone of the claims 1 to 5, the recess (10AB, 10BC, ..., 10FG) of which is a through-opening and after casting forms a dividing partition (1AB, 1BC, ..., 1FG) between two cooling-fluid discharge drillings in a trailing edge of a turbomachine blade (1).

8. Method according to anyone of the claims 1 to 5, the recess of which is not a through-opening and after casting forms a feature that disrupts the flow.

9. Method according to claim 1 or 2, the milling of which is performed using a milling tool comprising a head (100A) with a diameter ranging between 0.3 and 0.8 mm and a helical cutting flute (100B) the helix angle of which ranges between 40 and 60 degrees.

## Patentansprüche

1. Verfahren zum Herstellen eines Gießkerns für Turbinenschaufeln (1), der mindestens eine Wandaussparung (10AB, 10BC, ..., 10FG) umfasst, wobei das Verfahren das Formen in einer Gießform einer Mischung, die einen Füllstoff aus Keramikteilchen und ein organisches Bindemittel umfasst, das Entnehmen aus der Gießform, das Ausbrennen des Bindemittels und eine Wärmebehandlung zur Verfestigung des Kerns umfasst, **dadurch gekennzeichnet, dass** in der Gießform ein Rohling (10) des Kerns ohne die Aussparung geformt wird und die Aussparung (10AB, 10BC, ..., 10FG), nachdem der Rohling (10) aus der Gießform entnommen wurde, und vor dem Arbeitsgang der Wärmebehandlung mechanisch durch Fräsen spanabhebend bearbeitet wird.

2. Verfahren nach Anspruch 1, wobei die Bearbeitung durch aufeinanderfolgende Durchgänge über eine bestimmte Dicke erfolgt, die zwischen 0,1 und 2 mm liegt.

3. Verfahren nach Anspruch 1 oder 2, wobei die Bearbeitung mittels eines Fräsers (100) durch Materialabhebung auf einer Fräsmaschine mit mindestens drei Achsen ausgeführt wird.

4. Verfahren nach Anspruch 1, wobei die Bearbeitung einen Schritt der radialen Ausbreitung des Abschnitts zwischen der Oberfläche des Rohlings (10) und der Aussparung (10AB, 10BC, ..., 10FG) umfasst.

5. Verfahren nach einem der Ansprüche 1 bis 4 zum Herstellen eines Kerns, der eine Vielzahl von Aussparungen (10AB, 10BC, ..., 10FG) umfasst, wobei die Gießform eine gewisse Anzahl von beweglichen Nebenteilen umfasst, die geringer ist als die der Aussparungen des Kerns.

6. Verfahren nach einem der Ansprüche 1 bis 5, wobei die Aussparung durchgehend ist und nach dem Gießen eine Trennwand (1AB, 1 BC, ..., 1 FG) in einem Kühlkreis einer Turbinenschaufel (1) bildet.

7. Verfahren nach einem der Ansprüche 1 bis 5, wobei die Aussparung (10AB, 10BC, ..., 10FG) durchgehend ist und nach dem Gießen eine Trennwand (1AB, 1 BC, ..., 1 FG) zwischen zwei Bohrungen zum Entleeren von Kühlflüssigkeit in einer Austrittskante einer Turbinenschaufel (1) bildet.

8. Verfahren nach einem der Ansprüche 1 bis 5, wobei die Aussparung nicht durchgehend ist und nach dem Gießen ein Störelement bildet.

9. Verfahren nach Anspruch 1 oder 2, wobei das Fräsen mittels eines Fräswerkzeugs vorgenommen wird, das einen Kopf (100A) mit einem Durchmesser zwischen 0,3 und 0,8 mm und ein schraubenförmiges Schneidgewinde (100B), dessen Schraubwinkel zwischen 40 und 60 Grad liegt, umfasst.
